(19) Europäisches Patentamt
European Patent Office
Office européen des brevets

(11) Veröffentlichungsnummer: **0 022 077**
**B1**

(12) # EUROPÄISCHE PATENTSCHRIFT

(45) Veröffentlichungstag der Patentschrift: **16.03.83**

(51) Int. Cl.³: **B 01 D 11/04**

(21) Anmeldenummer: **80810199.2**

(22) Anmeldetag: **13.06.80**

(54) **Verfahren und Vorrichtung zum Trennen einer oder mehrerer gelösten Substanzen mit Hilfe zweier nicht mischbarer flüssiger Phasen.**

(30) Priorität: **19.06.79 CH 5710/79**

(43) Veröffentlichungstag der Anmeldung: **07.01.81 Patentblatt 81/1**

(45) Bekanntmachung des Hinweises auf die Patenterteilung: **16.03.83 Patentblatt 83/11**

(84) Benannte Vertragsstaaten: **CH DE FR GB IT LI NL SE**

(56) Entgegenhaltungen: **DE-A-2 154 467**

(73) Patentinhaber: **CIBA-GEIGY AG, Patentabteilung Postfach, CH-4002 Basel (CH)**
Patentinhaber: **Brenner, Max, Prof. Dr., Spiegelbergstrasse 33, CH-4059 Basel (CH)**

(72) Erfinder: **Brenner, Max, Prof. Dr., Spiegelbergstrasse 33, CH-4059 Basel (CH)**

**EP 0 022 077 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verfahren und Vorrichtung zum Trennen einer oder mehrerer gelösten Substanzen mit Hilfe zweier nicht mischbarer flüssiger Phasen

Die Erfindung betrifft ein Trennverfahren, bei dem die Tendenz zur Einstellung eines Verteilungsgleichgewichts für eine oder mehrere gelöste Substanzen zwischen zwei nicht mischbaren flüssigen Phasen ausgenützt wird, unter Verwendung einer Trennvorrichtung mit einem um seine Mittelachse drehbaren und an einen motorischen Drehantrieb angeschlossenen kreiszylindrischen Kammeraggregat, welches durch achsnormale Trennwände in eine Vielzahl von Kammern unterteilt ist, die durch exzentrische Durchflussöffnungen in den Trennwänden miteinander kommunizieren, wobei die beiden Phasen das Kammeraggregat im Gegenstrom mit einstellbarem Flussverhältnis durchlaufen und das die zu isolierende Substanz und Begleitsubstanzen enthaltene Trenngut einer Stelle zwischen den beiden Endkammern des Kammeraggregats zugeführt wird, welche Stelle eine oder mehrere aneinanderliegende Kammern umfassen kann.

Ein derartiges Trennverfahren sowie eine zu dessen Durchführung geeignete Vorrichtung ist z.B. in der DE-A 2 154 467 ausführlich erläutert. Bei diesem bekannten Verfahren erfolgt die Abtrennung der interessierenden Substanz, z.B. irgendeines Wirkstoffs, von Begleitstoffen z.B. derart, dass die Begleitstoffe aus dem zuerst mit dem Stoffgemisch oder Trenngut beschickten Kammeraggregat allmählich austreten, während die interessierende Substanz sich im Aggregat anreichert. Dies ist möglich, weil das Kammeraggregat von zwei entgegengesetzt gerichteten Strömen flüssiger Lösungsmittel, die miteinander nicht mischbar sind und verschiedene Dichten besitzen, durchflossen wird.

Jede Substanz S, die in einem solchen Zwei-Phasen-System gelöst ist oder wird, verteilt sich so auf die beiden Phasen, dass sich ein Konzentrationsverhältnis einstellt, welches in erster Näherung von den vorgegebenen Volumina der Phasen und von der eingebrachten Menge der Substanz unabhängig ist. Man bezeichnet dieses Verhältnis als Verteilungskoeffizienten K. Es hat also die Substanz S den Verteilungskoeffizienten $K_S$. Er entspricht dem Verhältnis

$$\left(\frac{c_o}{c_u}\right)_S ,$$

wobei $c_o$ und $c_u$ die Gleichgewichtskonzentrationen von S in der leichteren oberen bzw. schwereren unteren Phase bedeuten. Hat sich dieses Verhältnis eingestellt, so spricht man von einem Konzentrationsgleichgewicht.

Wird S an irgendeiner Stelle, vorzugsweise in eine Trennkammer im mittleren Teil des von den beiden nicht-mischbaren Flüssigkeiten (Oberphase und Unterphase) durchlaufenen Kammeraggregats eingebracht, so wird nach Massgabe von $K_S$ ein Teil von S mit der Oberphase in der einen Richtung und der Rest von S mit der Unterphase in der anderen Richtung verschoben. Beide Anteile gelangen dabei an Orte, wo noch kein Konzentrationsgleichgewicht herrscht. Dies bedeutet an jedem solchen Ort einen teilweisen Platzwechsel (Übergang in die jeweilige Gegenphase) des dort befindlichen Anteils von S. Platzwechsel ist gleichbedeutend mit Umkehr der Wanderungsrichtung. Solche Vorgänge spielen sich im Aggregat überall da ab, wo Anteile von S zugegen sind. Im Mittel bewegt sich schliesslich die Gesamtmenge von S mit einer gewissen Geschwindigkeit nach links, oder mit jeweils gleicher Geschwindigkeit nach links wie nach rechts, oder mit einer gewissen Geschwindigkeit nach rechts. Wanderungsrichtung und Geschwindigkeit werden bei gegebenem Phaseninhalt der Trennvorrichtung ausschliesslich vom Verteilungskoeffizienten $K_S$ und dem Verhältnis der Strömungsgeschwindigkeiten von Ober- und Unterphase (Fluss-Verhältnis R) bestimmt.

In der DE-A 2 154 467 wird erwähnt, dass im Fall $K_S \cdot R = 1$ die Substanz S nach zentraler Einführung in die Maschine «stehen bleibt». Dies erklärt sich gemäss obigen Ausführungen, weil sich die jeweilige Links- und Rechtswanderung im Mittel aufhebt. Wie bei jedem Mittelwert, so beobachtet man auch hier eine Streuung: die interessierende Substanz S breitet sich im Sinne einer Wahrscheinlichkeitsverteilung gleichmässig nach links und rechts aus, und zwar um so weiter, je länger die Vorrichtung betrieben wird, je grösser also die Phasenvolumina sind, welche nach der Einspeisung von S die Vorrichtung (Kammeraggregat) durchflossen haben. Erstreckt sich die Ausbreitung von S schliesslich über das ganze Kammeraggregat, so geht der Vorgang insofern weiter, als S von da ab links und rechts mit dem Ausfluss von Unter- bzw. Oberphase aus der Vorrichtung austritt. Der in der Vorrichtung verbleibende S-Anteil verkleinert sich bei fortgesetztem Betrieb, bis das Kammeraggregat leer ist: Elution von S im batch-Verfahren.

Nun kann man in das Kammeraggregat eine weitere Portion von S (mit den Begleitstoffen) einspeisen und die Elution im batch-Verfahren wiederholen. Man kann die zweite Einspeisung aber auch vornehmen, bevor die erste Portion eluiert ist. Insbesondere kann man S kontinuierlich einspeisen. Als Folge davon wird die Vorrichtung sich in bezug auf S nicht mehr entleeren. Es wird sich vielmehr ein Zustand einstellen, in dem sich die pro Zeiteinheit eingespeiste Menge von S und die pro Zeiteinheit eluierte Menge von S die Waage halten. Dieser «stationäre» Zustand ist dadurch gekennzeichnet, dass jede Trennkammer der Vorrichtung eine charakteristische zeitlich unveränderliche Menge von S enthält; liegt die Einspeisung in der Aggregatmitte, so ist die Mengenverteilung um diese Kammer symmetrisch.

Der in der DE-A 2 154 467 anvisierte portionenweise Betrieb für «stehendes» S sieht vor, den Maschinenbetrieb im Moment beginnender Elution von S abzubrechen; anfänglich mit S eingespeiste Begleitstoffe mit Verteilungskoeffizienten $K_B$ grösser oder kleiner als $K_S$ würden sich zu diesem Zeitpunkt nicht mehr oder nur noch teilweise im Aggregat befinden, weil sie dieses mit der Unter- oder Oberphase nach Massgabe ihrer mittleren Wanderungsrichtung und -geschwindigkeit ganz oder teilweise verlassen

haben würden. Der unausweichliche Effekt einer Betriebsweise mit $R = 1/K_S$ ist eine Abreicherung der Begleitstoffe in der ursprünglichen S-haltigen Mischung (Trenngut), also eine Reinigung von S, dadurch realisierbar, dass die Maschine entleert und der Inhalt von den Lösungsmitteln (Ober- und Unterphase) beispielsweise durch Verdampfen befreit wird.

Die DE-A 2 154 467 offenbart auch eine kontinuierliche Variante des Verfahrens, gemäss welchem angereichertes S nach der Einstellung eines stationären Verteilungszustands kontinuierlich aus dem zentralen Teil des Kammeraggregats entnommen wird.

Bei den in der DE-A 2 154 467 angegebenen Verfahren ist es prinzipiell essentiell, dass die Bedingung $R = 1/K_S$ peinlich genau eingehalten wird. Schwankungen in Zusammensetzung und Einspeisegeschwindigkeit des Trennguts einerseits, und Schwankungen in den Phasenflüssen (infolge von Schwankungen der Drehzahl des Kammeraggregats, der hydrostatischen Drücke an den Aggregateingängen und der Viskosität der Phasen) andererseits, sowie Schwankungen der Raumtemperatur können in diesem Zusammenhang Schwierigkeiten bereiten. In der DE-A 2 154 467 ist deshalb vorgesehen, die Einhaltung der obengenannten Bedingung anhand automatisierbarer analytischer Kontrollen der symmetrischen Verteilung von S innerhalb des Kammeraggregats zu prüfen und gegebenenfalls durch einen Regelmechanismus zu gewährleisten.

Aufgabe der Erfindung ist, ein einfacheres und gleichzeitig wirkungsvolleres Trennverfahren der eingangs definierten Art zu schaffen. Diese Aufgabe wird erfindungsgemäss durch die im Patentanspruch 1 angegebenen Massnahmen gelöst.

Ein wesentlicher Punkt des erfindungsgemässen Verfahrens ist, dass es nicht mehr das Ziel verfolgt, die Substanz S symmetrisch über das Kammeraggregat zu verteilen und diese Verteilung automatisch zu regeln. Symmetrische Verteilung von S kann nämlich dazu führen, dass ein Begleitstoff B mit einem Verteilungskoeffizienten $K_B$, der sich nur wenig vom Verteilungskoeffizienten $K_S$ der Substanz S unterscheidet, ebenfalls fast symmetrisch verteilt wird. Eine ins Gewicht fallende Abreicherung von B wird in solchen Fällen unmöglich. Ausserdem hat sich in der Praxis gezeigt, dass die zentrale Entnahme von der Substanz S im stationären Verteilungszustand nicht ohne Verluste möglich ist, indem je ein gewisser Prozentsatz von S auch an den Enden des Kammeraggregats mit der Ober- bzw. Unterphase austritt.

Diese Verluste lassen sich nun ohne weiteres unter eine Grenze von beispielsweise 1% bringen, wenn man erfindungsgemäss ein Fluss-Verhältnis R' einstellt, welches grösser oder kleiner als $R = 1/K_S$ ist, derart, dass S nicht mehr im Kammeraggregat «stehen bleibt», sondern eindeutig nach links oder nach rechts wandert und in der Folge eindeutig links oder rechts mit Unterphase bzw. Oberphase austritt. Ein solches Resultat lässt sich praktisch mit jedem Gemisch erzielen, welches die Substanz S enthält. Voraussetzung ist nur, dass die Gegenwart von S im Gemisch analytisch überhaupt erfassbar ist; diese Voraussetzung ist aber in der Praxis immer erfüllt, weil man sonst über das Vorhandensein der Substanz S keine Information besässe und somit auch keinen Anlass hätte, die Substanz aus dem betreffenden Trenngut abzutrennen.

Die Erfindung betrifft auch eine Vorrichtung zur Durchführung des Verfahrens. Die erfindungsgemässe Vorrichtung ist durch die im Patentanspruch 12 angeführten Merkmale gekennzeichnet.

Im folgenden wird die Erfindung anhand der Zeichnung näher erläutert. Es zeigen:

Fig. 1 und 2 je ein Ausführungsbeispiel einer zur Durchführung des Verfahrens geeigneten Vorrichtung und

Fig. 3 einen Detailschnitt nach Linie III-III in Fig. 1.

Die Trennvorrichtung in Fig. 1 umfasst im wesentlichen ein aus vier in Reihe geschalteten Teilaggregaten $KA_1$ - $KA_4$ bestehendes Kammeraggregat, vier Zuführsysteme F für Oberphase OP, Unterphase UP, in Oberphase gelöstes Trenngut TOP und in Unterphase gelöstes Trenngut TUP, je einen Fraktionensammler FSOP bzw. FSUP für Oberphasen- bzw. Unterphasen-Eluat, einen allen vier Teilaggregaten gemeinsamen Antriebsmotor A, einen die Drehstellungen des Kammeraggregats erfassenden Winkelkodierer W, vier Monitoren $M_1$ - $M_4$ und diverse Leitungen und Ventile V sowie eine gesamthaft mit ST bezeichnete elektronische Steuerung für den Antriebsmotor A und die Ventile V.

Jedes der vier Teilkammeraggregate $KA_1$ - $KA_4$ ist gleich wie das in der DE-A 2 154 467 beschriebene und dort mit 20 bezeichnete Kammeraggregat aufgebaut und angetrieben. Es ist durch achsnormale Trennwände TW (Fig. 3) in eine Vielzahl von Kammern $K_n$ unterteit, die durch exzentrische Durchflussöffnungen O in den Trennwänden miteinander kommunizieren. Die beiden Endkammern jedes Teilaggregats sind mit je zwei als Drehdurchführungen ausgebildeten Flüssigkeitsanschlüssen versehen, von denen je einer in den oberen und einer in den unteren Kammerbereich mündet und zur Zu- bzw. Abfuhr von Ober- bzw. Unterphase und in diesen gelösten Substanzen dienen.

Die trommelförmigen Teilkammeraggregate besitzen an ihren beiden Enden je einen Laufring L, mittels welchen die Aggregate auf je vier Laufwalzen LW gelagert und angetrieben sind. Die Laufwalzen werden über zwei Wellen, von denen in Fig. 1 nur eine sichtbar ist, vom Motor A angetrieben.

Wie schon erwähnt, entsprechen Aufbau und Antrieb jedes einzelnen Kammeraggregats sowie viele weitere apparative Details voll und ganz der DE-A 2 154 467. Diese DE-A wird somit ausdrücklich als integrierender Bestandteil der vorliegenden Patentbeschreibung erklärt.

Die vier Teilkammeraggregate $KA_1$ - $KA_4$ sind funktionell in Reihe geschaltet, und zwar derart, dass die Oberphasenzufuhranschlüsse mit Unterphasenabfuhranschlüssen und Unterphasenzufuhranschlüsse mit Oberphasenabfuhranschlüssen verbunden sind. Der Oberphasenzufuhranschluss und der Unterphasenabfuhranschluss des Aggregats $KA_1$ ist an das Oberphasenzuführsystem F-OP bzw. den Unterphasenfraktionensammler FSUP angeschlossen. Der Oberphasenabfuhranschluss und der Unterphasenzufuhranschluss des vierten Teilaggregats $KA_4$ ist mit dem Oberphasenfraktionensammler FSOP bzw. dem Unterphasenzuführsystem F-UP verbunden. Die Oberphasen- und Unterphasenverbindungsleitungen zwischen den beiden mittleren Aggregaten $KA_2$ und $KA_3$ sind an die Fördersysteme für in Oberphase gelöstes Trenngut TOP bzw. für in Unterphase gelöstes Trenngut TUP angeschlossen.

In den Phasen-Verbindungsleitungen zwischen den Kammeraggregaten $KA_1$ und $KA_2$ bzw. $KA_3$ und $KA_4$ ist je einer der vier Monitoren $M_1$ - $M_4$ angeordnet. Die Monitoren $M_1$ und $M_2$ erfassen die Konzentrationen der jeweils interessierenden Substanz S, während die Monitoren $M_3$ und $M_4$ für die Detektion von die Substanz S begleitenden Stoffen ausgebildet sein können. Falls die interessierende Substanz S in der Unterphase ($M_1$) oder der Oberphase ($M_2$) schlecht messbar ist, kann S auch in der jeweils anderen Phase mittels der Monitoren $M_3$ bzw. $M_4$ bestimmt werden. Dies ist dadurch möglich, dass $M_1$ und $M_3$ bzw. $M_2$ und $M_4$ jeweils am gleichen Ort im Kammeraggregat angeordnet sind, wo die lokalen Konzentrationen in Ober- und Unterphase in gegenseitiger Beziehung stehen. In der Praxis ist also in der Regel nur je einer der Monitoren $M_1$ und $M_3$ bzw. $M_2$ und $M_4$ aktiv, der jeweils andere ist entweder gar nicht vorhanden oder überbrückt oder wird für die Steuerung nicht berücksichtigt. Näheres über die Art der Monitoren wird weiter unten noch ausgeführt.

Die beiden mittleren Teilkammeraggregate $KA_2$ und $KA_3$ umfassen je etwa 50 - 200 Kammern und bilden die eigentliche Trennapparatur. Die beiden äusseren Aggregate $KA_1$ und $KA_4$ dienen im wesentlichen nur als Pufferstufen und umfassen lediglich je etwa 10 Kammern. Diese Zahlenangaben sind selbstverständlich rein beispielsweise und können je nach Erfordernis in weiten Grenzen variiert werden.

Die vier Teilaggregate könnten selbstverständlich auch zu einer einzigen Einheit kombiniert sein, wobei dann nur dafür Sorge getragen sein müsste, dass die Monitoren in geeigneter Weise an die entsprechenden Kammern angeschlossen werden können.

Zum Betrieb der Trennvorrichtung werden zunächst die Kammern der Kammeraggregate z.B. wie in der genannten DE-A 2 154 467 beschrieben mit für das jeweilige Trennproblem passender Ober- und Unterphase beschickt, wobei die dafür nötige Betätigung der Ventile, Fördersysteme usw. automatisch durch die entsprechend ausgebildete Steuerung ST erfolgt. Nun wird das die zu isolierende Substanz S enthaltene Trenngut T zentral, d.h. zwischen den beiden Teilaggregaten $KA_2$ und $KA_3$ eingespeist und die Vorrichtung mit einem willkürlichen, durch entsprechende Einstellung bzw. Betätigung der Steuerung ST vorgewählten Phasenflussverhältnis R, z.B. 1 : 1, entsprechend den allgemeinen Richtlinien der DE-A 2 154 467 in Gang gesetzt und dann sich selbst überlassen.

Für das Folgende sei der Einfachheit halber angenommen, die interessierende Substanz S sei in Ober- und Unterphase gut messbar. Dann werden die Konzentrationen von S in Ober- und Unterphase von den Monitoren $M_2$ und $M_1$ direkt erfasst und die beiden übrigen Monitoren sind inaktiv.

Nach dem Inbetriebsetzen der Apparatur beginnt die Substanz S je nach dem gewählten Anfangsflussverhältnis R mehr oder weniger schnell nach links oder nach rechts durch das Gesamtkammeraggregat zu wandern. Die Steuerung ST ist nun so ausgelegt, dass sie das Flussverhältnis der beiden Phasen dermassen zu regeln trachtet, dass die Substanz S nur an einer Seite des Kammeraggregats — hier z.B. rechts mit der Oberphase — austritt und anderseits aber möglichst lange im Kammeraggregat verweilt.

Je nach dem vorgewählten Flussverhältnis R wird nun einer der beiden Monitoren $M_1$ und $M_2$ zuerst das Überschreiten eines vorgegebenen unteren Schwellenwertes der Konzentration der Substanz S feststellen und ansprechen. Ist dies z.B. der Monitor $M_1$, so bedeutet dies unter der Annahme, dass die Substanz als Eluat der Oberphase rechts entnommen werden soll, dass sich die Substanz S in die falsche Richtung bewegt. Es setzt nun über die Steuerung ST ein Regelvorgang ein, der das Flussverhältnis R der beiden Phasen in einem solchen Sinne verändert, dass die vom Monitor $M_1$ erfasste relative Konzentration von S, die auf die Unterphasen-Konzentration von S in der Nähe des Monitors $M_2$ bezogen ist, einen vorgegebenen oberen Schwellenwert von 1 bis 2% nicht überschreitet. Das Ergebnis dieser Regelung ist, dass sich die mittlere Wanderungsrichtung der Substanz S umkehrt und dass die Substanz S das Kammeraggregat rechts mit der Oberphase verlässt.

Falls der Monitor $M_2$ als erster anspricht, hat zwar die Wanderungsrichtung der Substanz S den gewünschten Sinn, die Substanz wandert jedoch zu rasch. Der Monitor $M_2$ veranlasst nun die Steuerung ST dahingehend auf das Phasenflussverhältnis R einzuwirken, dass die Wanderungsgeschwindigkeit verlangsamt wird, bis schliesslich auch der Monitor $M_1$ anspricht. Sobald letzterer nun die dem unteren Schwellenwert entsprechende Mindestkonzentration von S detektiert hat, übernimmt er wieder allein die Kontrolle über das Flussverhältnis, wobei als Regelkriterium wieder gilt, dass die Konzentration von S bei $M_1$ den schon genannten oberen Schwellenwert nicht überschreiten darf. Das sich dabei einstellende Gleichgewichtsflussverhältnis sei mit R' bezeichnet.

Sofern die Substanz S im Unterschied zur vorstehenden Annahme in Form eines Eluats mit der Unterphase auf der linken Seite des Kammeraggregats entnommen werden soll, vertauschen sich die Rollen von $M_1$ und $M_2$ sinngemäss. Im wesentlichen ist also, je nach gewünschter Wanderungsrichtung der Substanz S, immer nur einer der beiden Monitoren $M_1$ und $M_2$ für die Flussverhältnisregelung verantwortlich.

Unterschreitet die Konzentration von S den unteren Schwellenwert während einer vorgegebenen Zeitspanne t nach der letzten erfolgten Korrektur von R durch den verantwortlichen Monitor, so bedeutet dies, dass die Elution ihrem Ende entgegengeht. Die Steuerung sorgt dann dafür, dass die Vorrichtung stillgelegt wird und beispielsweise durch ein akustisches Signal Überprüfung der Situation verlangt. Wird das Trenngut (S + Begleitstoffe) entsprechend DE-A 2 154 467 nicht batch-wise sondern während des Betriebs der Vorrichtung in kleinen regelmässigen zeitlichen Abständen «quasikontinuierlich» zugeführt, so bleibt natürlich das für den batch-Prozess typische dauernde Absinken der Konzentration von S unter den unteren Schwellenwert aus. Sie wird stattdessen unbeschränkt unter ständiger Kontrolle des zuständigen Monitors zwischen den vorgeschriebenen beiden Schwellenwerten pendeln, und damit wird eine kontinuierliche einseitige praktisch verlustlose Elution von S auf der gewünschten Seite des Kammeraggregats garantiert. Diese Garantie ist auch dann gegeben, wenn das Verhalten von S durch irgendwelche Veränderungen in der Trenngutbeschaffenheit oder Zufuhr einerseits, oder durch Veränderung von Betriebsparametern andererseits beeinflusst wird.

Nun wird S allerdings im allgemeinen nicht frei von Begleitstoffen B eluiert werden. Jeder Begleitstoff B mit einem Verteilungskoeffizienten $K_B$ grösser als $K_S$ wird gegebenenfalls ebenso vollständig wie S im Oberphasen-Eluat erscheinen. Selbst Begleitstoffe mit $K_B$ um weniges kleiner als $K_S$ können noch teilweise mit der Oberphase eluiert werden; das Ausmass hängt ausser von $K_B$ von der Kammerzahl im Kammeraggregat ab. Müssen diese langsamen Begleitstoffe ohne Verlust an S entfernt werden, so empfiehlt sich eine Wiederholung der Trennoperation mit unveränderten Betriebsparametern, vorsichtshalber aber wieder unter Monitor-Kontrolle. Geht im Falle eines batch-Prozesses der Bruchteil p der ursprünglich vorhandenen Menge $m_B$ einer langsamen Begleitsubstanz in das Oberphaseneluat der ersten Trennoperation, so enthält das Oberphaseneluat der zweiten Trennoperation nur noch die Menge $p^2m_B$ usw. Entsprechende Verhältnisse ergeben sich als Resultat der Wiederholung einer Trennung mit kontinuierlicher Einspeisung.

War S von allen Substanzen, die vollständig mit der Oberphase eluiert wurden, die langsamste — eine Bedingung, die bei gegebener Kammerzahl im Aggregat um so eher erfüllt ist, je höher die vom Monitor $M_1$ zu registrierenden Schwellenwerte der Konzentration von S auf der Seite des Unterphasenaustrittes angesetzt waren — sind also alle Verteilungskoeffizienten $K_B$ der Begleitstoffe B im Oberphaseneluat grösser als $K_S$, so gelingt jetzt die portionenweise oder kontinuierliche Abtrennung von S durch zentrale portionenweise oder quasikontinuierliche Einspeisung des betreffenden Oberphaseneluats in einem zweiten Arbeitsgang in derselben oder einer zweiten Vorrichtung, wobei wieder mit dem gleichen Phasenpaar wie vorher, aber jetzt mit einem Flussverhältnis R'' gearbeitet wird, welches quantitative Elution von S mit der austretenden Unterphase bewirkt, während die Begleitsubstanzen B vorzugsweise mit der Oberphase austreten. Das Aufsuchen von R'' erfolgt wie für R' beschrieben automatisch mittels der Monitoren $M_1$ und $M_2$, das Innehalten von R'' aufgrund von $M_2$.

Sollte S noch unerwünschte Anteile einer Begleitsubstanz B mit einem Verteilungskoeffizienten $K_B$ enthalten, der nur um weniges grösser ist als $K_S$, so wird man auch hier wie oben beschrieben die Trennoperation so oft wiederholen, bis der verbleibende Anteil an B nicht mehr stört, selbstverständlich auch jetzt wieder unter Monitor-Kontrolle. Dies gilt wieder in gleicher Weise für das batch-Verfahren wie für den kontinuierlichen Betrieb.

Trat S im ersten Arbeitsgang nicht, wie angenommen, mit der Oberphase, sondern mit der Unterphase aus, so sind natürlich alle Folgemassnahmen bis zur Abtrennung von reinem S entsprechend anzupassen.

Die Monitor-kontrollierte einseitige Elution von S nach zentraler Gemischzufuhr bringt nicht nur den Vorteil, dass die Maschine anhand des Verhaltens einer zu isolierenden Substanz S sich selbst steuern kann, sondern auch noch einen zweiten, der nicht minder bedeutsam ist. Er betrifft die mit einer vorgegebenen Kammerzahl erzielbare Trenngüte zwischen S und seinem nächsten Nachbarn auf der Skala der Verteilungskoeffizienten. Dieser nächste Nachbar wird im obendiskutierten Trennbeispiel entweder im ersten oder im zweiten Arbeitsgang abgetrennt. Die Trennung eines Gemisches aus gleichen Teilen S und B in eine S-Fraktion mit einem Gehalt von 99% S und eine B-Fraktion mit einem Gehalt von 99% B erfordert dann am wenigsten Trennkammern, wenn S und B das Kammeraggregat nach zentraler Einspeisung gleichzeitig an entgegengesetzten Enden verlassen. Die entsprechende Bedingung für R lautet $R = (K_S \cdot K_B)^{-0,5}$, und der erforderliche Kammerbedarf N lässt sich anhand der Formel $N = 1 + \frac{V+1}{V-1}$ abschätzen, wobei für den Trennfaktor V der Wert $K_S/K_B > 1$ oder der Wert $K_B/K_S > 1$ einzusetzen ist. Tabelle 1 gibt einen Vergleich zwischen N und Kammerzahlen $N_1$ bzw. $N_{10}$, die bei säulenchromatographischer Trennung erforderlich wären. Die Berechnung von $N_1$ bzw. $N_{10}$ basiert auf einem chromatographischen Kapazitätsfaktor k' um etwa 1 bzw. 10, bezogen auf die langsamer wandernde Substanz. Der Kapazitätsfaktor ist definiert als $k' = 1/K \cdot r$, wobei r das Volumenverhältnis von mobiler zu stationärer Phase im Trennsystem bedeutet. Dieses chromatogaphische Rechenbeispiel ist deshalb relevant, weil es bezüglich Kammerbedarf einem Maschinenbetrieb nach dem Diagramm der Fig. 9 der DE-A 2 154 467 entspricht.

Tabelle I

Berechnete Kammerzahlen zur Trennung einer 1:1 Mischung zweier Substanzen S und B in Abhängigkeit von den Trenn- und Kapazitätsfaktoren und k'

| | N | $N_{10}$ | $N_1$ | Reinheit von rückgewonnenem S und B |
|---|---|---|---|---|
| 2 | 28 | 63 | 184 | 99.2% |
| 1.41 | 53 | 229 | 734 | 99.1% |
| 1.19 | 105 | 925 | 2800 | 99.0% |
| 1.09 | 209 | 3560 | 11200 | 98.9% |
| 1.044 | 417 | 13700 | 46500 | 98.9% |

Die Reduktion des Kammerbedarfs bei symmetrischer Elution von S und B ist augenfällig. Bei zu kleiner gegebener Kammerzahl bedeutet symmetrische Elution unvollständige Auftrennung von S und B, sowie Verluste von S, indem ein Teil von S in der B-Fraktion verbleibt, und umgekehrt. Hier hilft nun der Monitor-kontrollierte Betrieb leicht weiter, indem er durch selbsttätige Anpassung des Flussverhältnisses R jeden gewünschten Kompromiss zwischen Reinheit und Ausbeute von S ermöglicht.

Der Monitor-kontrollierte Betrieb nach bisherigem Beschrieb umfasst zunächst den Vorgang des Einpendelns des Flussverhältnisses R durch zwei Monitoren $M_1$ und $M_2$, und anschliessend nur noch die Kontrolle von R durch einen Monitor. Man kann natürlich einen Monitor sparen, indem man die Einstellung von R manuell vornimmt und sich nur noch zur anschliessenden Kontrolle und eventuellen Nachregulierungen von R eines Monitors bedient.

Den bisher erläuterten Verfahrensvarianten ist gemeinsam, dass die Einspeisung des Trennguts mehr oder weniger zentral erfolgt und dass der oder die Monitoren in der Nähe der Enden des Kammeraggregats angeordnet sind. Für gewisse absatzweise durchzuführende Trennoperationen (batch-Prozesse) kann es jedoch auch von Interesse sein, den Ort der Trenngut-Einspeisung von der Mitte des Kammeraggregats wegzurücken. Die Fig. 2 zeigt eine entsprechend abgewandelte Trennvorrichtung, wobei der Einfachheit halber die Steuerung ST weggelassen wurde. Einander entsprechende Teile in Fig. 1 und 2 sind gleich bezeichnet.

Der wesentlichste Unterschied zur Apparatur nach Fig. 1 besteht darin, dass das Kammeraggregat nun nicht mehr vier, sondern nur noch drei Teilkammeraggregate $KA_1$ - $KA_3$ umfasst. Das erste davon dient wiederum hauptsächlich als Puffer, während die beiden übrigen die eigentliche Trennfunktion besitzen. Das Teilaggregat $KA_3$ besitzt etwa doppelt so viele Kammern wie das Teilaggregat $KA_2$. Die Einspeisungsstelle liegt zwischen diesen beiden Teilaggregaten. Die Gesamtkammeranzahl hängt natürlich sehr von der jeweiligen Trennaufgabe bzw. den geforderten Trennleistungen ab.

Zwischen dem ersten und dem zweiten Teilaggregat $KA_1$ und $KA_2$ ist in die Unterphasenverbindungsleitung ein innerer Monitor $M_i$ eingeschaltet, der im wesentlichen dem Monitor $M_1$ gemäss Fig. 1 entspricht. In der Oberphasenableitung befindet sich ein äusserer Monitor $M_a$, der seinerseits dem Monitor $M_2$ in Fig. 1 entspricht. Beide Monitoren sollen bei geeigneten Phasen auf die Substanz S ansprechen. Selbstverständlich könnte auch hier, falls S durch $M_i$ schlecht zu messen ist, wie bei Fig. 1 in der jeweils anderen Phasenleitung ein auf S ansprechender Monitor vorgesehen sein.

Hat man nun beispielsweise ein Gemisch dreier Stoffe A, S und B zu trennen, mit $K_A < K_S < K_B$ sowie $K_S/K_A =$ , $K_B/K_S =$ > > 1, so ist es zweckmässig, als Anfangswert für das Flussverhältnis $R = 1/K_A$ zu setzen, die Einspeisekammer(n) an solcher Stelle zu wählen, dass das Trennaggregat $KA_2 + KA_3$ im ungefähren Verhältnis 1 : 2 aufgeteilt wird, und den Monitor zwischen die beiden Teilaggregate $KA_1$ und $KA_2$ zu setzen und die Oberphase an dem Ende einzuführen, das dem Monitor $M_1$ benachbart ist. Sorgt jetzt der innere Monitor $M_i$ anhand zweier vorgegebener Konzentrationsschwellenwerte von S dafür, dass mit der Unterphase gerade nur Spuren von S(links) austreten, und lässt man die Vorrichtung laufen, bis S mit der Oberphase-(rechts) auszutreten beginnt (vorgegebener Konzentrationsschwellenwert), so erhält man in den Fraktionssammlern FSUP bzw. FSOP an den Aggregatenden

| | |
|---|---|
| a) eine Fraktion von reinem A | in Unterphase |
| b) eine Fraktion von A mit Spuren von S | in Unterphase |
| c) eine Fraktion von reinem B | in Oberphase |
| d) eine Fraktion von B mit Spuren von S | in Oberphase |
| e) eine Fraktion im Kammeraggregat, welche alles S neben allfälligen Resten von A und/oder B enthält. | |

Fraktion e) kann durch Wiederholung der Trenn-Operation von noch anwesenden Mengen A und/oder B befreit werden.

Fallen qualitativ gleiche Mischungen von A, S und B des öfteren zur portionenweisen Aufarbeitung nach obigem batch-Prozess an, so lohnt es sich, die Operation mit verschiedenen Phasen-Volumen-Verhältnissen r im Kammeraggregat durchzuspielen, um den im batch-Betrieb prinzipiell vorhandenen, oft erheblichen Einfluss von r auf die Trenngüte, die Trennzeit und den Lösungsmittelverbrauch quantitativ abzuklären mit dem Ziel, den Betrieb auch unter diesem Gesichtspunkt zu optimieren. Bei Verfügbarkeit einer grossen Kammerzahl ist ein solches batch-Verfahren die bevorzugte Betriebsart für die portionenweise Verarbeitung von Trenngut: Die Trennung ist zuverlässiger als bei dem in der DE-A 2 154 467 anhand der Fig. 12 erläuterten Verfahren, sei es ohne oder mit Monitoren, wie sie auf Seite 31 dieser Druckschrift vorgeschlagen werden.

Die verwendeten Monitoren müssen eine Grösse messen, welche direkt oder indirekt eine Funktion der Konzentration von S darstellt. Wird diese Messgrösse nicht von Begleitstoffen beeinflusst, so genügt es, den zu kontrollierenden Phasenfluss durch eine Messküvette zu leiten, wie dies schon in der DE-A 2 154 467 vorgeschlagen wird. In Frage kommen beispielsweise Absorptionsmessungen oder Emissionsmessungen (Fluoreszenz, Lumineszenz) im ultravioletten, sichtbaren und infraroten Bereich des elektromagnetischen Spektrums inkl. Atomabsorption, weiter Messungen des Brechungsindex, der optischen Drehung, der Dielektrizitätskonstanten, der Schallabsorption, der Leitfähigkeit, der Wärmekapazität, ferner die Messung elektrischer Potentiale [pH, pI, wobei I ein Ion oder eine andere direkt oder indirekt potentiometrisch erfassbare Aktivität darstellt (Beispiel Enzymelektroden)], die Messung von Strom/Spannungs-Werten (Voltametrie), und schliesslich die Messung der Strahlung von radioaktiven Tracersubstanzen bzw. die massenspektrometrische Messung von isotopensignierten Tracern.

Wird andererseits die Messgrösse von Begleitstoffen beeinflusst, so muss der Monitor zunächst eine Probe der zu kontrollierenden Phase einer analytischen Trennung unterwerfen und erst dann die Messung vornehmen. Hierzu eignen sich z.B. automatisierte Chromatographen (lineare oder zirkulare Dünnschichtchromatographie, hochauflösende schnelle Säulenchromatographie mit flüssiger mobiler Phase, Gaschromatographie) für sich allein oder z.B. in Kombination mit einem Massenspektrometer. Alle diese Apparatetypen sind käuflich.

Ebenso käuflich bzw. zum unmittelbaren Wissen des Fachmanns gehörend sind die einzelnen Funktionsgruppen der elektronischen Steuerung. Sie umfasst im wesentlichen nur einfache Regelschaltungen, die fest vorgegebene oder von Hand eingestellte Sollwerte mit von den Monitoren bzw. z.B. dem Winkelkodierer W gelieferten Ist-Werten vergleichen und über entsprechende Stellglieder eine Änderung der betreffenden Grössen in der gewünschten Richtung herbeiführen.

Die Abfrage der Monitoren erfolgt zweckmässigerweise in gewissen zeitlichen Abständen. Der Betrag dieser Abstände ist vorzugsweise um so grösser, je kleiner die Abweichung des geregelten Ist-Wertes vom jeweiligen Sollwert ist, und umgekehrt.

Die Regelung bzw. Beeinflussung des Phasenflussverhältnisses kann auf verschiedenste Weise bewirkt werden. So kann z.B. die massgebende Niveaudifferenz bei Steuerung des Phasenflusses über den hydrostatischen Druck geändert oder der Kolbenhub bei Kolbenpumpen verstellt werden. Ferner lässt sich das Flussverhältnis auch über die Abfolge der Ventilbetätigungen, welche bestimmen, wie viele Oberphasendosierstösse auf einen Unterphasendosierstoss kommen, beeinflussen oder auch durch eine Änderung der Bogenlänge bzw. Zeitdauer, während welcher Ober- und Unterphase während einer Umdrehung des Kammeraggregats fliessen können.

Hierarchisch können die ersten drei Einwirkungsarten auf das Flussverhältnis zu einer Grobsteuerung, die letzte Art zu einer Feinsteuerung dienen.

Die Öffnungs- und Schliessdauern der diversen Ventile in den Zu- und Abfuhrleitungen für Ober- und Unterphase usw. werden gemäss der in der DE-A 2 154 467 beschriebenen elektronischen Steuerung durch Zeitschaltstufen gesteuert, die von durch Schaltnocken am Umfang des Kammeraggregats betätigten Kontakten gestartet werden. Gemäss einer vorteilhaften Ausgestaltung der Erfindung umfasst die Steuerung ST nunmehr keine solchen Zeitschaltstufen, sondern steuert die entsprechenden Funktionen in direkter Abhängigkeit von der Drehstellung des Kammeraggregats, welche vom Winkelkodierer W laufend erfasst wird. Auf diese Weise ist die Steuerung von Drehzahländerungen völlig unabhängig, viel flexibler und einfacher zu bedienen.

Es wurde überraschend festgestellt, dass die Lage der Phasengrenze in den einzelnen Trennkammern des Aggregats davon abhängig ist, welche Position (Drehstellung) die Kommunikationsöffnungen O in den Trennwänden TW in dem Moment haben, da jeweils der Fluss der Unterphase einsetzt oder abbricht. Zwecks Konstanthaltung der Phasengrenze muss daher die Position der Kommunikationsöffnungen O während des Betriebs des Trennaggregats ebenfalls konstant gehalten werden. Dies lässt sich mit der drehwinkelabhängigen Steuerung jedoch viel leichter und einfacher erreichen als mit der Zeitgebersteuerung nach der DE-A 2 154 467.

In Fig. 3 ist eine einzelne Kammer $K_n$ eines Kammeraggregats im Querschnitt vergrössert dargestellt. Die Kammer besteht im wesentlichen aus einem Ring AR und einer Trennwand TW mit der Kommunikationsöffnung O. Der Ring AR besitzt eine Öffnung OR, die mit einem Stab RS verschlossen ist. Die Ringöffnung dient zur Entnahme von Proben aus der Kammer und wird auch während der Einfüllung der Ober- und Unterphasen geöffnet. Der Stab RS dient als Verschluss für die Ringöffnung und gleichzeitig auch als Rührorgan. Versuche haben gezeigt, dass die Trennleistung des Kammeraggregats durch diesen Rührstab verbessert wird.

Die Trennwand TW jeder Kammer $K_n$ besteht aus einem von der einen oder von der anderen Phase gut benetzbaren Material. Nach einer besonders vorteilhaften Ausgestaltung des Kammeraggregats können nun die Kammertrennwände aus verschiedenen Materialien bestehen, und zwar derart, dass jeweils auf eine z.B. von der Oberphase gut benetzbare Trennwand eine Trennwand folgt, die von der Unterphase gut benetzbar ist, und umgekehrt. Auch könnten die Trennwände beispielsweise so beschaffen bzw. behandelt sein, dass sie auf ihrer einen Seite besser von der einen und auf ihrer anderen Seite besser von der anderen Phase benetzbar sind. Alle diese Massnahmen können natürlich beliebig variiert und kombiniert werden und führen zu einer besseren Trennleistung des Kammeraggregats.

In den vorstehend beschriebenen Beispielen des erfindungsgemässen Trennverfahrens wurde die Substanzwanderungsrichtung und -geschwindigkeit durch Veränderung des Flussverhältnisses R der beiden Phasen gesteuert. Da die Wanderungsrichtung einer gegebenen Substanz S vom Produkt $K_S \cdot R$ abhängt, kann man prinzipiell auch durch eine Monitor-kontrollierte Änderung von $K_S$ Einfluss auf das Substanzverhalten nehmen. Während aber eine Änderung von R alle Produkte $K \cdot R$, d.h. die Wanderungsgeschwindigkeiten aller Substanzen im Kammeraggregat gleichsinnig beeinflusst, können Änderungen jener Parameter (Temperatur, Zusammensetzung der Phasen), welche jeden Verteilungskoeffizienten K individuell beeinflussen, auf der Skala der K-Werte eine Änderung der Reihenfolge herbeiführen. Infolgedessen sind denkbare Befehle zur Steuerung des Substanzverhaltens durch Änderung der Raumtemperatur, Änderung des pH-Werts in der einfliessenden Unterphase, Änderung der quantitativen Zusammensetzung von ternären Zweiphasensystemen und dergleichen mehr während des Maschinenbetriebs nur in Ausnahmefällen sinnvoll. Einer entsprechenden Verarbeitung von Monitorsignalen steht selbstverständlich nichts im Wege.

**Patentansprüche**

1. Trennverfahren, bei dem die Tendenz zur Einstellung eines Verteilungsgleichgewichts für eine oder mehrere gelöste Substanzen zwischen zwei nicht mischbaren flüssigen Phasen ausgenützt wird, unter Verwendung einer Trennvorrichtung mit einem um seine Mittelachse drehbaren und an einen motorischen Drehantrieb angeschlossenen kreiszylindrischen Kammeraggregat, welches durch achsnormale Trennwände in eine Vielzahl von Kammern unterteilt ist, die durch exzentrische Durchflussöffnungen in den Trennwänden miteinander kommunizieren, wobei die beiden Phasen das Kammeraggregat im Gegenstrom mit einstellbarem Flussverhältnis durchlaufen und das die zu isolierende Substanz und Begleitsubstanzen enthaltende Trenngut einer Stelle zwischen den beiden Endkammern des Kammeraggregats zugeführt wird, welche Stelle eine oder mehrere aneinanderliegende Kammern umfassen kann, dadurch gekennzeichnet, dass das Flussverhältnis (R) der beiden Phasen (OP, UP) so eingestellt wird, dass das Produkt aus dem eingestellten, durch das Verhältnis der Strömungsgeschwindigkeiten der beiden Phasen gegebenen Flussverhältnis (R') und dem durch das Verhältnis der Gleichgewichtskonzentrationen ($c_o$,$c_u$) der Substanz (S) in der oberen und der unteren Phase gegebenen Konzentrationsverhältnis ($K_S$) für die zu isolierende Substanz (S) ungleich 1 ist, so dass die Substanz (S) eine definierte Wanderungsrichtung durch das Kammeraggregat erhält, und dass das Flussverhältnis ferner gleichzeitig so eingestellt wird, dass die Konzentration der zu isolierenden Substanz (S) am der Wanderungsrichtung der Substanz entgegengesetzten, hinteren Ende des die Trennfunktion übernehmenden Teils des Kammeraggregats einen zwischen einem unteren und einem oberen Schwellenwert liegenden Wert einnimmt.

2. Verfahren nach Anspruch 1, dadurch gekennzeichnet, dass der obere Schwellenwert für die Konzentration der Substanz (S), bezogen auf die Konzentration der Substanz am in deren Wanderungsrichtung vorderen Ende des Kammeraggregats, bei maximal 1 bis 2% gewählt wird.

3. Verfahren nach Anspruch 1 oder 2, dadurch gekennzeichnet, dass die Konzentration der Substanz (S) am genannten hinteren Ende des Kammeraggregats durch einen automatischen Monitor ($M_1$ bzw. $M_i$) laufend überwacht und das Flussverhältnis (R) der beiden Phasen (OP, UP) anhand der vom Monitor ermittelten Konzentrationswerte automatisch gesteuert wird.

4. Verfahren nach Anspruch 3, dadurch gekennzeichnet, dass auch die Konzentration der Substanz (S) am in Wanderungsrichtung der Substanz liegenden, vorderen Ende des Kammeraggregats oder in der Nähe dieses Endes durch einen automatischen Monitor ($M_2$ bzw. $M_a$) überwacht und zur Steuerung des Flussverhältnisses (R) der beiden Phasen (OP, UP) herangezogen wird.

5. Verfahren nach einem der vorstehenden Ansprüche, dadurch gekennzeichnet, dass das Trenngut (T) etwa in der Mitte des Kammeraggregats zugeführt und die Phase mit der zu isolierenden Substanz (S) an dessen vorderem Ende entnommen wird.

6. Verfahren nach einem der Ansprüche 1 bis 4, dadurch gekennzeichnet, dass das Trenngut (T) bei etwa einem Drittel der Gesamtlänge des Kammeraggregats, gerechnet von dessen hinterem Ende weg, zugeführt und dass der Betrieb abgebrochen wird, wenn die Konzentration der zu isolierenden Substanz (S) am vorderen Ende des Kammeraggregats einen vorgegebenen Schwellenwert erreicht.

7. Verfahren nach Anspruch 4 und 6, dadurch gekennzeichnet, dass die zu isolierende Substanz (S) einer zwischen den Enden des Kammeraggregats befindlichen Kammer entnommen wird.

8. Verfahren nach einem der vorstehenden Ansprüche, dadurch gekennzeichnet, dass es zwei oder mehrere gleiche Zyklen umfasst, wobei bei jedem Zyklus die aus dem jeweils vorhergehenden Zyklus resultierende Phase bzw. der aus dem jeweils vorhergehenden Zyklus resultierende Kammeraggregat-Inhalt mit der zu isolierenden Substanz (S), gegebenenfalls nach Konzentration derselben, denselben Behandlungsschritten unterworfen wird wie das Ausgangstrenngut (T).

9. Verfahren nach den Ansprüchen 5 und 8, dadurch gekennzeichnet, dass das Flussverhältnis (R) der beiden Phasen (OP, UP) so eingestellt wird, dass die Wanderungsrichtung der zu isolierenden Substanz (S) in bezug auf die beiden Phasen der Wanderungsrichtung des jeweils vorhergehenden Zyklus entgegengesetzt ist.

10. Verfahren nach einem der vorstehenden Ansprüche, dadurch gekennzeichnet, dass die Bestimmung der Konzentration der zu isolierenden Substanz (S) intervallweise erfolgt, wobei die Länge dieser Messintervalle um so grösser ist, je geringer der gemessene Konzentrationswert vom angestrebten Sollwert abweicht.

11. Verfahren nach Anspruch 5, dadurch gekennzeichnet, dass es kontinuierlich durchgeführt wird.

12. Vorrichtung zur Durchführung des Verfahrens nach Anspruch 1, mit einem um seine Mittelachse drehbaren und an einen motorischen Drehantrieb angeschlossenen kreiszylindrischen Kammeraggregat, welches durch achsnormale Trennwände in eine Vielzahl von Kammern unterteilt ist, die durch exzentrische Durchflussöffnungen in den Trennwänden miteinander kommunizieren, mit Mitteln zum gegenströmigen Durchleiten von zwei nicht miteinander mischbaren flüssigen Phasen durch das Kammeraggregat, mit Mitteln zur Zufuhr von Trenngut in eine oder mehrere benachbarte Kammern, mit einem in der Nähe des einen Aggregatendes im Strömungsweg der einen Phase angeordneten ersten Monitor für die Messung der Konzentration der zu isolierenden Substanz in einer der Phasen, und mit einer automatischen Steuerung, die das Flussverhältnis der beiden Phasen aufgrund der vom Monitor erfassten Konzentrationswerte steuert, dadurch gekennzeichnet, dass die Steuerung dazu ausgebildet ist, das Phasenflussverhältnis so zu steuern, dass die vom Monitor erfasste Konzentration der Substanz einen oberen Schwellenwert von maximal 1 bis 2%, bezogen auf die entsprechende Konzentration am anderen Ende des Aggregats, nicht übersteigt.

13. Vorrichtung nach Anspruch 12, dadurch gekennzeichnet, dass in der Nähe des dem ersten Monitor gegenüber liegenden Ende des Kammeraggregats im Strömungsweg der anderen Phase ein zweiter Monitor für die Substanzkonzentration angeordnet ist, und dass die Steuerung aufgrund der von den beiden Monitoren gelieferten Messwerte das Flussverhältnis der beiden Phasen ausgehend von einem beliebigen Anfangswert vollautomatisch so einstellt, dass der vom ersten Monitor erfasste Konzentrationswert den genannten oberen Schwellenwert nicht übersteigt.

14. Vorrichtung nach Anspruch 12 oder 13, dadurch gekennzeichnet, dass sie einen die Drehstellung des Kammeraggregats erfassenden Winkelkodierer aufweist, und dass die Steuerung die Fliess- und Stillstandszeiten für die beiden Phasen aus den vom Winkelkodierer erfassten Drehstellungen des Kammeraggregats bestimmt.

15. Vorrichtung nach einem der Ansprüche 12 bis 14, dadurch gekennzeichnet, dass die Trennwände unterschiedliche Benetzungseigenschaften bezüglich der beiden Phasen besitzen.

## Claims

1. A separating process utilizing the tendency of one or more dissolved substances to assume equilibrium of distribution between two non-miscible liquid phases, with the use of a separator apparatus comprising a cylindrical chamber unit rotatable about its centre axis and connected to a rotary motor drive, said unit being divided, by partitions normal to the axis, into a plurality of chambers communicating with one another through eccentric passage apertures in the partitions, the two phases flowing through the chamber unit in counter-current in an adjustable flow ratio, and the mixture containing the substance to be isolated and accompanying substances is supplied to a place between the two end chambers of the chamber unit, which place may comprise one or more adjacent chambers, characterised in that the flow ratio (R) of the two phases (OP, UP) is so adjusted that the product of the flow ratio (R'), given by the ratio of the flow velocities of the two phases, and the concentration ratio ($K_S$), given by the ratio of the equilibrium concentration ($c_o$, $c_u$) of the substance (S) in the upper and lower phases, for the required substance (S) is not equal to 1, so that the substance (S) receives a specific direction of migration through the chamber unit, and the flow ratio is at the same time so adjusted that the concentration of the substance (S) to be isolated at the rear of the chamber unit which serves as the part effecting the separating function, opposite to the direction of migration of the substance has a value lying between a lower and an upper threshold value.

2. A process according to claim 1, characterised in that the upper threshold value for the concentration of the substance (S) with respect to the concentration of the substance in the direction of migration at the front end of the chamber unit is selected to be not more than 1 to 2%.

3. A process according to claim 1 or 2, characterised in that the concentration of the substance (S) at the said rear end of the chamber unit is continuously monitored by an automatic monitor ($M_1$ or $M_i$) and the flow ratio (R) of the two phases (OP, UP) is automatically controlled from the concentration values detected by the monitor.

4. A process according to claim 3, characterised in that the concentration of the substance (S) at or near the front end of the chamber unit in the direction of migration of the substance is monitored by an automatic monitor ($M_2$ or $M_a$) and is used to control the flow ratio (R) of the two phases (OP, UP).

5. A process according to one of the preceding claims, characterised in that the mixture (T) is supplied approximately at the centre of the chamber unit and the phase with the substance (S) to be isolated is removed at the front end thereof.

6. A process according to one of claims 1 to 4, characterised in that the mixture (T) is supplied at about one-third of the total length of the chamber unit, counting from its rear end, and operation is discontinued when the concentration of the substance (S) to be isolated at the front end of the chamber unit reaches a predetermined threshold value.

7. A process according to claims 4 to 6, characterised in that the substance (S) to be isolated is withdrawn from a chamber situated between the end of the chamber unit.

8. A process according to one of the preceding claims, characterised in that it comprises two or more identical cycles, in each of which the phase from the previous cycle, or the chamber unit contents with the substance (S) to be isolated from the previous cycle, are subjected to the same treatment steps as the initial mixture (T), if necessary after concentration.

9. A process according to claims 5 and 8, characterised in that the flow ratio (R) of the two phases (OP, UP) is so adjusted that the direction of migration of the substance (S) to be isolated with respect to the two phases is the opposite to the direction of migration of the previous cycle.

10. A process according to one of the preceding claims, characterised in that the concentration of the substance (S), to be isolated is determined at intervals, the length of these intervals being in inverse proportion to the magnitude of the deviation of the measured concentration from the set-value.

11. A process according to claim 5, characterised in that it is carried out continuously.

12. Apparatus for performing the process according to claim 1, with a cylindrical chamber unit rotatable about its centre axis and connected to a rotary motor drive, sait unit being divided, by partitions normal to the axis, into a plurality of chambers communicating with one another through eccentric passage apertures in the partitions, with means for countercurrent flow of two non-miscible liquid phases through the chamber unit, means for supplying feed mixture to one or more adjacent chambers, a first monitor for measuring the concentration of the substance to be isolated in one of the phases, said first monitor being disposed near one end of the unit in the flow path of one phase, and an automatic control system which controls the flow ratio of the two phases from the concentration values detected by the monitor, characterised in that the control system is so constructed as to control the phase flow ratio, that the substance concentration detected by the monitor does not exceed a top threshold value of at most 1 to 2%, with respect to the corresponding concentration at the other end of the unit.

13. Apparatus according to claim 12, characterised in that a second monitor for the substance concentration is disposed in the flow path of the other

phase near the end of the chamber unit remote from the first monitor, and that the control system fully automatically so adjusts the flow ratio of the two phases starting from an arbitrary initial value, by reference to the measurements supplied by the two monitors, that the concentration value detected by the first monitor does not exceed the said top threshold value.

14. Apparatus according to claim 12 or 13, characterised in that it has an angle coder which detects the rotary position of the chamber unit, and that the control system determines the flow and standstill times for the two phases from the chamber unit rotary positions detected by the angle coder.

15. Apparatus according to one of claims 12 to 14, characterised in that the partitions have different wetting properties with respect to the two phases.

**Revendications**

1. Procédé de séparation qui tire profit de la tendance à l'établissement d'un équilibre de partage pour une ou plusieurs substances dissoutes dans deux phases liquides non miscibles, en utilisant une installation de séparation avec un groupe de chambres cylindriques circulaires tournant autour de son axe central et accouplé avec un entraînement tournant à moteur, qui est subdivisé en une multitude de chambres par des parois de séparation perpendiculaires à l'axe, communiquant entre elles par des ouvertures de passage excentriques dans les parois de séparation, les deux phases traversant le groupe de chambres à contre-courant avec un rapport de débits réglable, la matière à séparer qui contient la substance à isoler et des substances qui l'accompagnent étant amenée en un endroit entre les deux chambres d'extrémité du groupe de chambres, cet endroit pouvant comprendre une ou plusieurs chambres situées les unes à côté des autres, caractérisé en ce que le rapport de débits (R) des deux phases (OP, UP) est réglé de manière telle que le produit du rapport de débit (R') réglé, donné par le rapport de vitesse de débit des deux phases, par le rapport de concentration ($K_S$) donné par le rapport de concentration d'équilibre ($c_o$, $c_u$) de la substance (S) dans la phase supérieure et la phase inférieure est différent de l'unité pour la substance (S) à isoler, de manière que la substance (S) soit contrainte à une direction de migration définie dans le groupe de chambres, le rapport de débit étant de plus réglé de manière que la concentration de la substance (S) à isoler prenne une valeur située entre une valeur seuil inférieure et une valeur seuil supérieure à l'extrémité arrière de la partie du groupe de chambres qui remplit la fonction de séparation et qui est opposée au sens de migration de la substance.

2. Procédé selon la revendication 1, caractérisé en ce que la valeur seuil supérieure pour la concentration de la substance (S) par rapport à la concentration de la substance à l'extrémité avant du groupe de chambres dans la direction de migration de cette substance est choisie au maximum de 1 à 2 pour cent.

3. Procédé selon la revendication 1 ou 2, caractérisé en ce que la concentration de la substance (S) est en permanence surveillée à ladite extrémité arrière du groupe de chambres par un moniteur automatique ($M_1$ ou $M_i$), le rapport de débit (R) des deux phases (OP, UP) étant commandé automatiquement à l'aide des valeurs de concentration détectés par le moniteur.

4. Procédé selon la revendication 1, caractérisé en ce que la concentration de la substance (S) est également surveillée à l'extrémité avant du groupe de chambres, dans le sens de la migration de la substance, ou à proximité de cette extrémité, au moyen d'un moniteur automatique ($M_2$ ou $M_a$) et qu'elle est utilisée pour la commande du rapport de débit (R) des deux phases (OP, UP).

5. Procédé selon l'une des revendications précédentes, caractérisé en ce que la matière à séparer (T) est amenée environ au centre du groupe de chambres, la phase avec la substance à isoler (S) étant prélevée à son extrémité avant.

6. Procédé selon l'une des revendications 1 à 4, caractérisé en ce que la matière à séparer (T) est amenée à environ un tiers de la longueur totale du groupe de chambres, calculée à partir de son extrémité arrière, et que le fonctionnement est interrompu lorsque la concentration de la substance à isoler (S) atteint une valeur seuil prédéterminée à l'extrémité avant du groupe de chambres.

7. Procédé selon les revendications 4 et 6, caractérisé en ce que la substance à isoler (S) est prélevée dans une chambre située entre les extrémités du groupe de chambres.

8. Procédé selon l'une des revendications précédentes, caractérisé en ce qu'il comprend deux ou plusieurs cycles identiques, dans chaque cycle la phase résultant du cycle précédent, c'est-à-dire le contenu du groupe de chambres résultant du cycle précédent, est soumise avec la substance à isoler (S), le cas échéant après sa concentration, aux mêmes opérations de traitement que la matière à séparer initiale.

9. Procédé selon les revendications 5 et 8, caractérisé en ce que le rapport de débit (R) des deux phases (OP, UP) est réglé de manière que le sens de migration de la substance à isoler (S) soit opposé par rapport aux deux phases au sens de migration du cycle précédent.

10. Procédé selon l'une des revendications précédentes, caractérisé en ce que la détermination de la concentration de la substance à isoler (S) est faite à des intervalles, la longueur de ces intervalles étant d'autant plus grande que la valeur de concentration mesurée s'écarte moins de la valeur nominale désirée.

11. Procédé selon la revendication 5, caractérisé en ce qu'il est appliqué de façon continue.

12. Installation pour la mise en oeuvre du procédé de la revendication 1, comprenant un groupe de chambres cylindriques, circulaires, tournant autour de son axe central et accouplé avec un entraînement tournant à moteur, qui est subdivisé en une multitude de chambres par des parois de séparation perpendiculaires à l'axe communiquant entre elles par des ouvertures de partage excentriques dans les parois de séparation, avec des dispositifs pour faire traverser à contre-courant le groupe de chambres par deux phases liquides non miscibles entre elles, des dispositifs pour amener la matière à séparer dans une ou plusieurs chambres voisines, un premier moniteur disposé au voisinage d'une extrémité du groupe dans le circuit de circulation d'une première phase, et destiné à mesurer la concentration de la substance à isoler dans l'une des phases, et avec un dispositif automatique de commande qui commande le rapport de débit des deux phases en fonction de la valeur de concentration détectée par le moniteur, caractérisé en ce que le dispositif de commande est réalisé pour commander le rapport de débit des phases de manière que la concentration de la substance détectée par le moniteur ne dépasse pas une valeur seuil supérieure d'au maximum 1 à 2 pour cent par rapport à la concentration correspondante à l'autre extrémité du groupe.

13. Installation selon la revendication 12, caractérisé en ce qu'un second moniteur pour la concentration de la substance est disposée au voisinage de l'extrémité du groupe de chambres opposée au premier moniteur dans le trajet de circulation de l'autre phase, et que le dispositif de commande règle entièrement automatiquement, en fonction des valeurs de mesures délivrées par les deux moniteurs, le rapport de débit des deux phases à partir d'une valeur initiale quelconque, de manière que la valeur de concentration détectée par le premier moniteur ne dépasse pas ladite valeur seuil supérieure.

14. Installation selon la revendication 12 ou 13, caractérisé en ce qu'elle comporte un codeur d'angle qui détecte la position angulaire du groupe de chambres, le dispositif de commande déterminant les périodes de circulation et d'arrêt des deux phases à partir de la position angulaire détectée par le codeur d'angle.

15. Installation selon l'une des revendications 12 à 14, caractérisé en ce que les parois de séparation ont des caractéristiques différentes de mouillage par rapport aux deux phases.

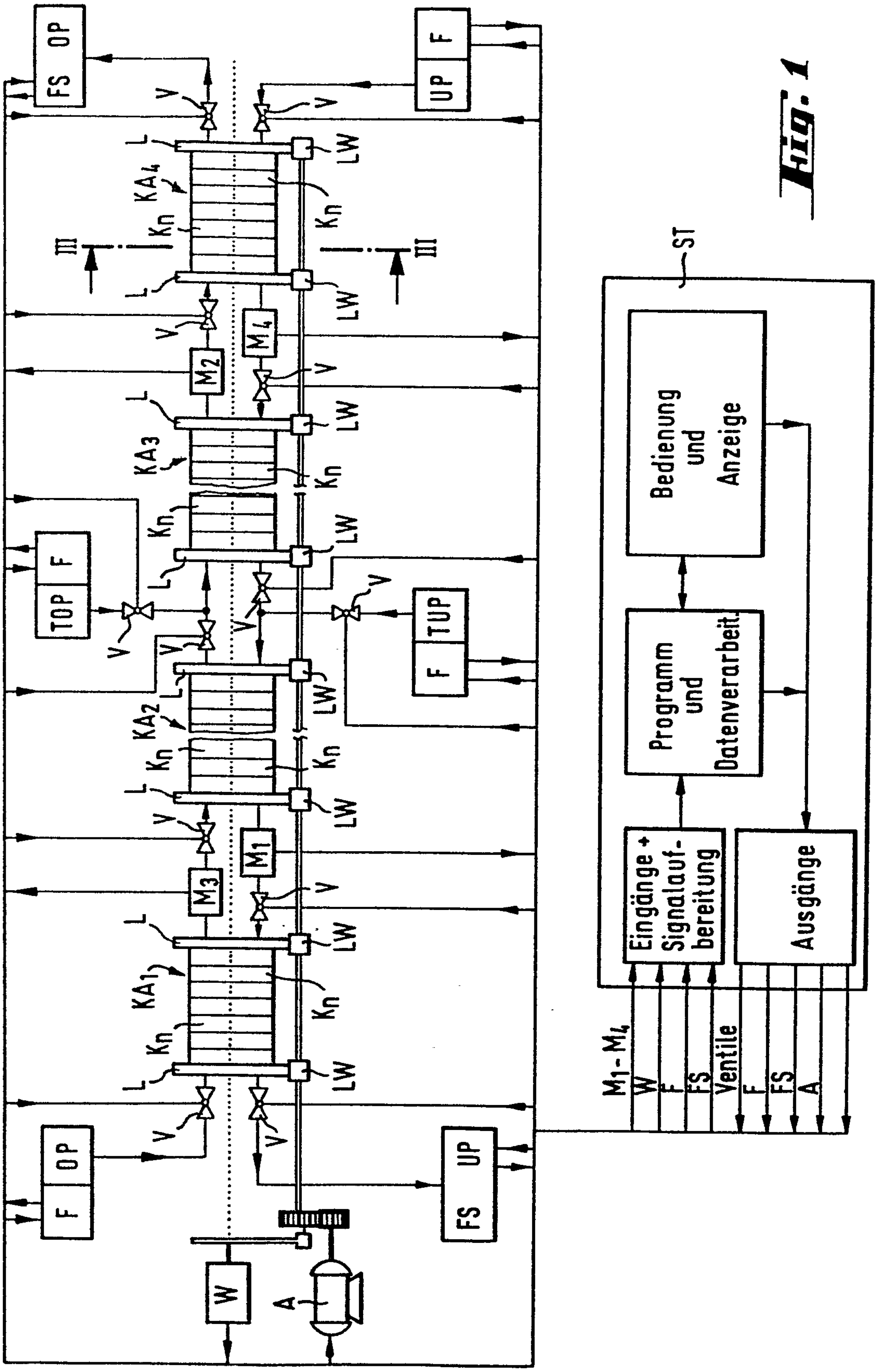

FS OP
UP F
V
L
LW
KA4
Kn
III
M2
M4
KA3
TOP F
TUP F
KA2
M3
M1
KA1
F OP
FS UP
W
A
ST
Bedienung und Anzeige
Programm und Datenverarbeit.
Eingänge + Signalaufbereitung
Ausgänge
M1 - M4
W
F
FS
Ventile
F
FS
A


Fig. 1

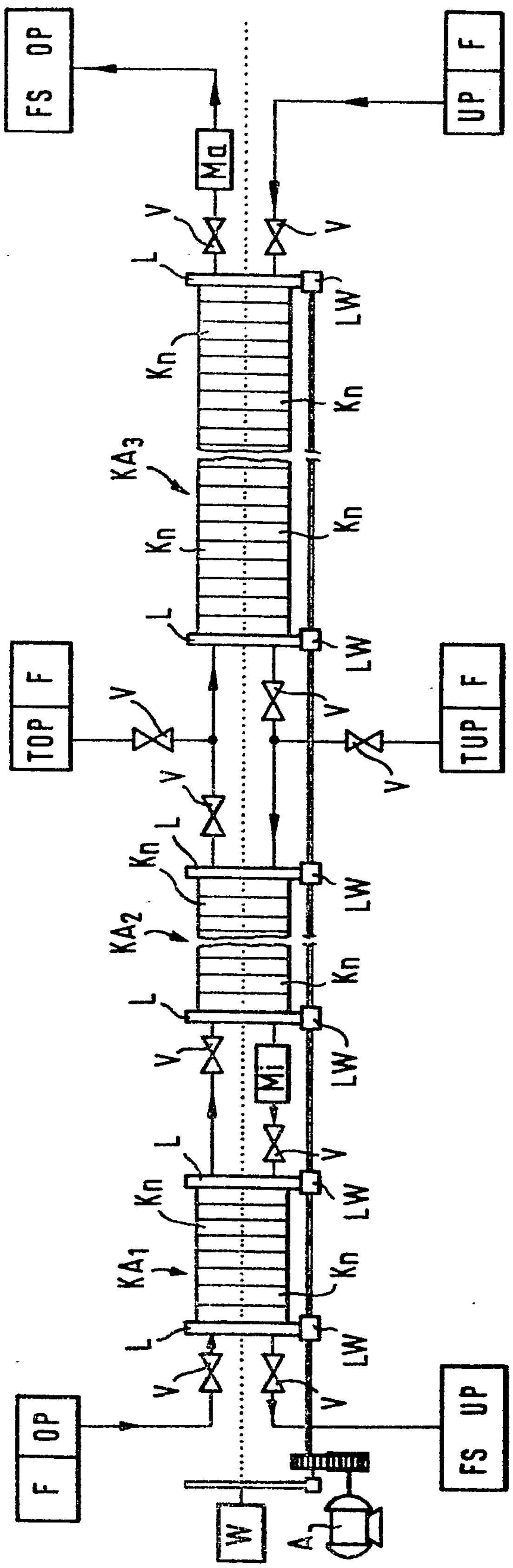


Fig. 2

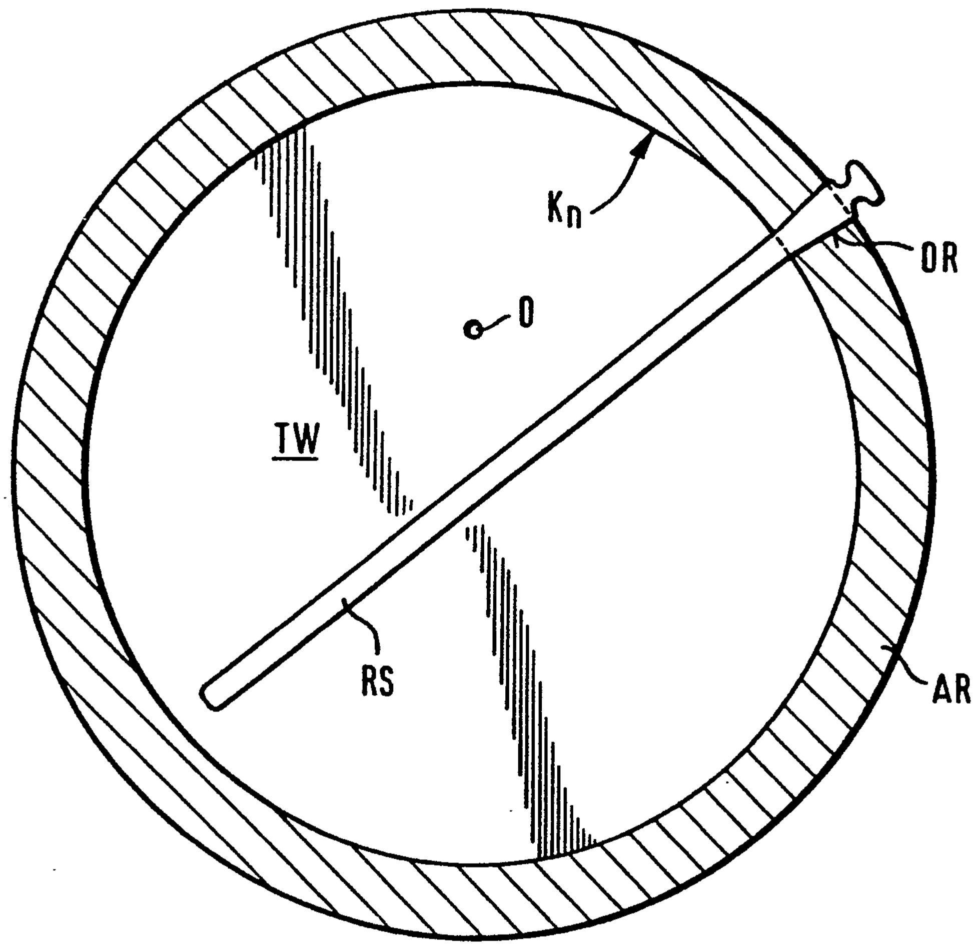


Fig. 3